# EUROPEAN PATENT SPECIFICATION

(11) **EP 2 757 072 B1**
(45) Date of publication and mention of the grant of the patent: **07.12.2016**
(21) Application number: 13151768.2
(22) Date of filing: 18.01.2013
(51) Int. Cl.: C02F 1/00, F04B 53/20, E03B 1/00

(54) **Fluid shunt system**
Fluidnebenschlusssystem
Système de dérivation de fluide

(43) Date of publication of application: 23.07.2014
(73) Proprietor: Holimay Corporation, Taoyuan County 334 (TW)
(72) Inventor: Hsiao, Yu-Ming, 334 TAOYUAN COUNTY (TW)
(74) Representative: Becker Kurig Straus

(56) References cited:
- EP-A1- 0 343 998
- EP-A1- 2 186 951
- US-A1- 2008 264 607
- US-A1- 2012 216 875

## Description

### 1. Field of the Invention

The present invention relates to fluid discharging technology and more particularly, to a fluid shunt system for shunting and discharging a fluid.

### 2. Description of the Related Art

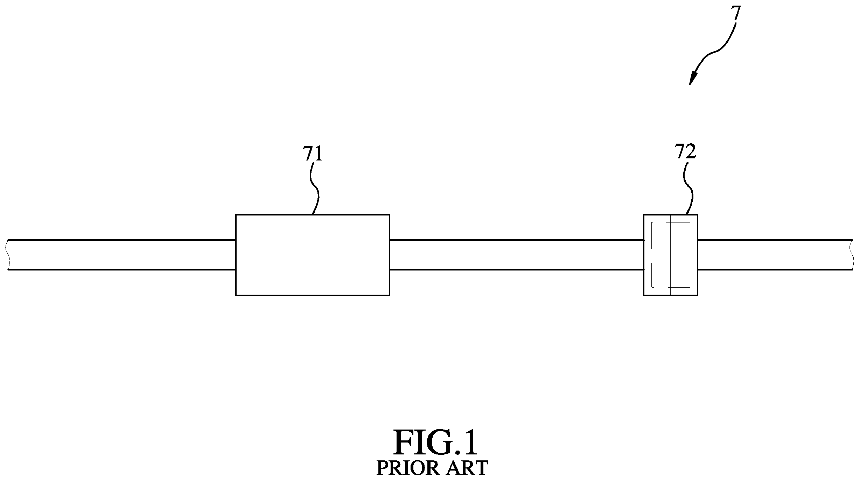

Referring to FIG. 1, a conventional water pump-based drainage system is shown. As illustrated, the water pump-based drainage system comprises a water pump **71,** and a filter **72** connected to the water pump **71.** The water pump **71** can be a centrifugal water pump or rotary water pump. The filter **72** is adapted to remove hair, dirt, gravel, twigs, leaves, scraps of paper and other impurities from water passing therethrough. When the water pump is started to pump water, water will goes through the filter **72** and then into the water pump **71,** preventing accumulation of impurities in the water pump **71** to cause damage to the water pump **71.** Although the arrangement of the filter **72** can prevent clogging and damage to the water pump **71,** however, the filter **72** must be regularly replaced. If the filter **72** is clogged and not replaced, the water pump **71** may idle, causing damage.

US 2012/0216875 discloses a ship provided with a ballast water intake and treatment system related.

### SUMMARY OF THE INVENTION

The present invention has been accomplished under the circumstances in view. It is the main object of the present invention to provide a fluid shunt system, which comprises a filter, a shunt device and a water pump. The filter comprises an accommodation chamber, an inlet, a first outlet, a second outlet and a filter element. The inlet, the first outlet and the second outlet are respectively disposed in communication with the accommodation chamber. The filter element is mounted inside the accommodation chamber and aimed at the first outlet. The shunt device is connected to the filter, comprising a first flow path and a second flow path. The first flow path defines an inlet and an outlet. The diameter of the first flow path is larger than the diameter of the second flow path. The second flow path has two opposing ends thereof respectively connected to the first flow path and the second outlet of the filter. One of the two opposing ends of the second flow path is disposed between the inlet and outlet of the first flow path. The water pump is connected between the first outlet of the filter and the inlet of the first flow path of the shunt device.

Thus, when the water pump is started, the filter filters impurities from a part of the intake flow of water, preventing clogging of the water pump, and impurities stayed in the accommodation chamber can be guided out through the shunt device, reducing the burden on the filter.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is a schematic drawing illustrating the arrangement of a conventional water pump-based drainage system.
FIG. 2 is an exploded view of a filter for fluid shunt system in accordance with the present invention.
FIG. 3 is an elevational assembly view of the filter shown in FIG. 2.
FIG. 4 is a schematic sectional view of the filter shown in FIG. 3.
FIG. 5 is an elevational view of a shunt device for fluid shunt system in accordance with the present invention.
FIG. 6 is a sectional view of the shunt device shown in FIG. 5.
FIG. 7 is a schematic assembly view of a fluid shunt system in accordance with the present invention.
FIG. 8 is an elevational view of an alternate form of the fluid shunt system in accordance with the present invention.

### DETAILED DESCRIPTION OF THE INVENTION

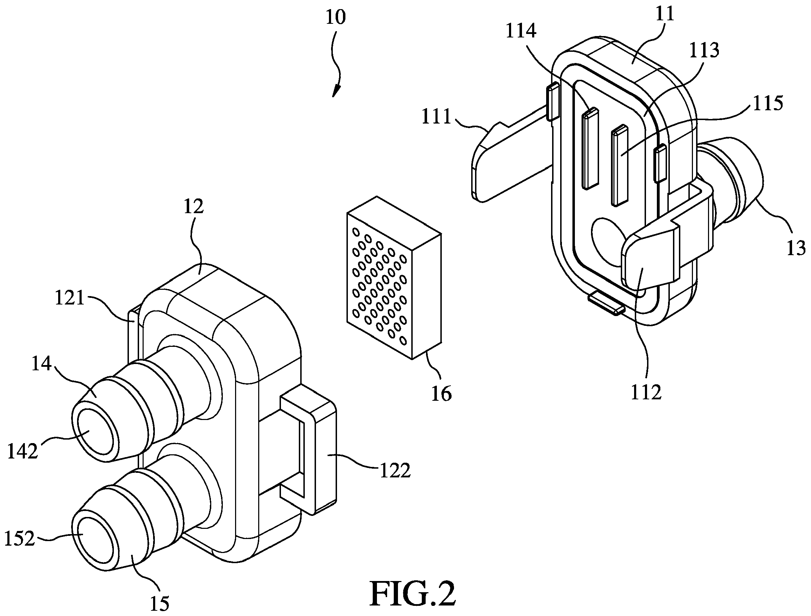

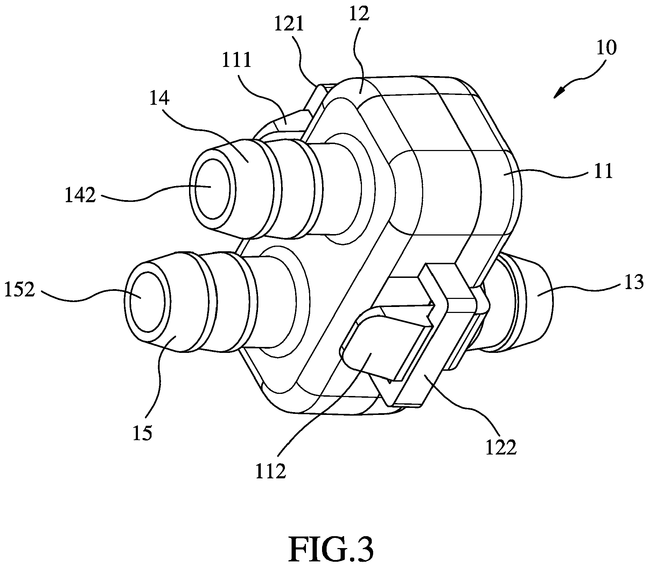

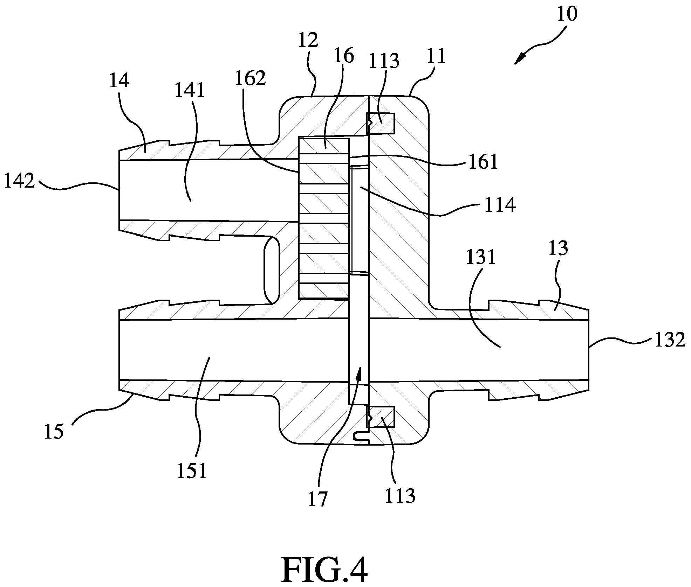

Referring to FIGS. 2-4, an exploded view of a filter for fluid shunt system, an elevational assembly view of the filter and a schematic sectional view of the filter are shown. As illustrated, the filter **10** of the fluid shunt system comprises a first housing **11,** a second housing **12,** a water intake pipe **13,** a first water outlet pipe **14,** a second water outlet pipe **15,** and a filter element **16.**

The first housing **11** and the second housing **12** are fastened together, defining therebetween an accommodation chamber **17** between the inside wall of the first housing **11** and the inside wall of the second housing **12.** The water intake pipe **13** is formed integral with the outer wall of the first housing **11,** defining therein a passage **131** in communication with the accommodation chamber **17** and an inlet **132** at one end of the passage **131.** The first water outlet pipe **14** and the second water outlet pipe **15** are respectively formed integral with the outer wall of the second housing **12,** each defining therein a passage **141** or **151** respectively in communication with the accommodation chamber **17** and a first outlet **142** or second outlet **152** at one end of the passage **141** or **151.** The filter element **16** is set between the first housing **11** and the second housing **12,** i.e., within the accommodation chamber **17,** and aimed at the first water outlet pipe **14.** In this embodiment, the filter element **16** is aimed at the first outlet **142 of** the first water outlet pipe **14.** When water is flowing from the water intake pipe **13** into the filter **10,** a part of intake water will be filtered by the filter element **16 and** then guided out of the first water outlet pipe **14,** and the other part of intake water will be directly guided out of the second water outlet pipe **15,** in other words, the filter **10** will simply filter a part of impurities from the water passing therethrough.

The first housing **11** comprises two retaining hooks **111, 112** respectively disposed at two opposite lateral sides thereof. The second housing **12** comprises two retaining rings **121, 122** respectively disposed at two opposite lateral sides thereof. The two retaining hooks **111, 112** are respectively inserted through the two retaining rings **121, 122** and then respectively hooked thereon to secure the first housing **11** and the second housing **12** together. When going to replace the filter element **16,** disengage the two retaining hooks **111, 112** from the two retaining rings **121, 122** and then separate the first housing **11** and the second housing **12,** and then take out the filter element **16** for quick replacement.

The first housing **11** further comprises an elastic ring **113** made out of an elastic material, such as elastic plastics, rubber or silicon rubber. The elastic ring **113** is mounted in the inner wall of the first housing **11** and stopped against the inner wall of the second housing **12** to stop water from leaking out of the first housing **11** and the second housing **12.**

The first housing **11** further comprises two ribs **114, 115** located at the inner wall thereof and kept apart from each other in a parallel manner. The filter element **16** comprises two opposite sides **161, 162.** One side **161** of the filter element **16** is abutted against the two ribs **114, 115 of** the first housing **11.** The other side **162** of the filter element **16** is abutted against the inner wall of the second housing **12.** Thus, the surrounding around the two ribs **114, 115** allows water in the accommodation chamber **17** to pass therethrough, increasing the filtering area. However, it is to be noted that the number of the rib can be 1, 2, or more than 2, not limited to what is illustrated in the annexed drawings.

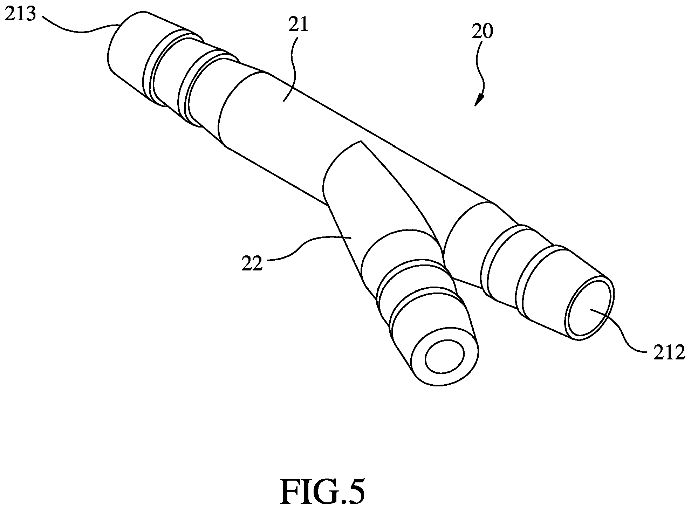

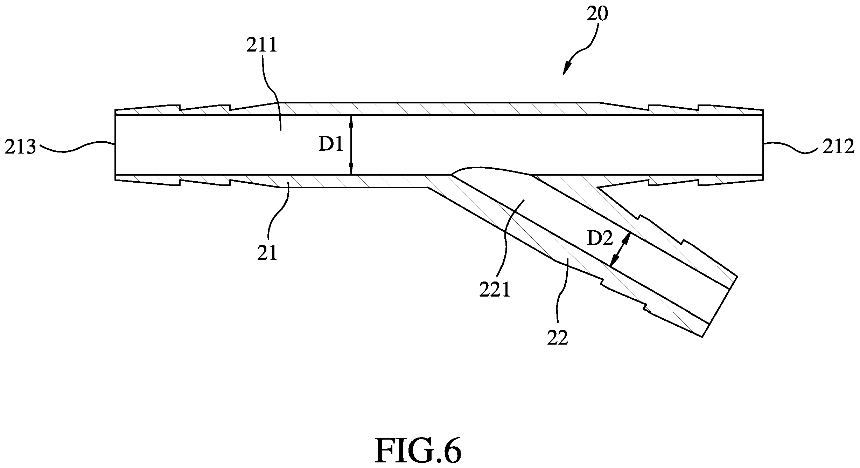

Referring to FIGS. 5 and 6, an elevational view of a shunt device for fluid shunt system in accordance with the present invention and a sectional view of the shunt device are shown. As illustrated, the shunt device **20** comprises a main tube **21** and a shunt tube **22.** The main tube **21** defines therein a first flow path **211** having opposing inlet **212** and outlet **213.** The shunt tube **22** is connected to the main tube **21** and extended from the tube wall of the main tube **21,** defining therein a second flow path **221** that is kept in communication with the first flow path **211** between the inlet **212** and outlet **213** of the first flow path **211.** Preferably, the diameter **D1** of the first flow path **211** is larger than the diameter **D2** of the second flow path **221.** The application and purpose of the shunt device **20** will be explained latter.

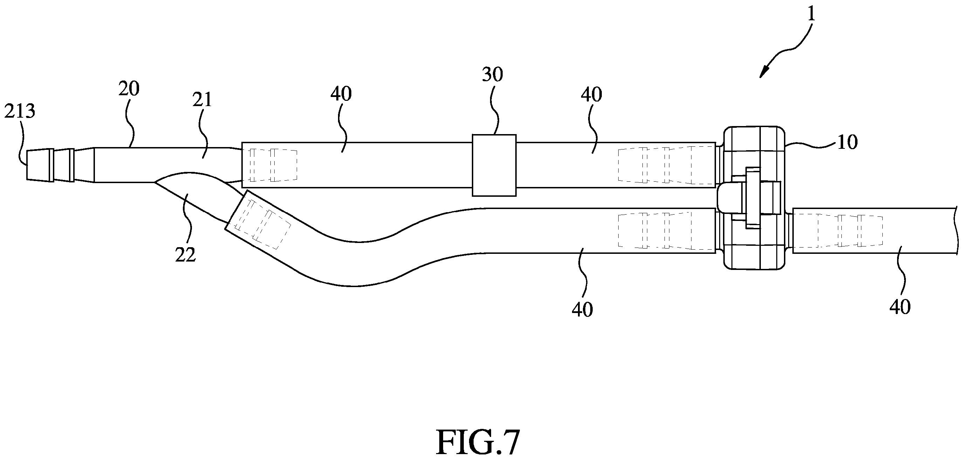

FIG. 7 is a schematic sectional assembly view of the fluid shunt system in accordance with the present invention. As illustrated, the fluid shunt system **1** comprises the aforesaid filter **10,** the aforesaid shunt device **20,** and a water pump **30.** The first water outlet pipe **14** of the filter **10** is connected to one end of the water pump **30.** The opposite end of the water pump **30** is connected to the main tube **21** of the shunt device **20.** The second water outlet pipe **15** of the filter **10** is connected to the shunt tube **22** of the shunt device **20.** With respect to the type of the water pump **30,** please refer to the previously described prior art water pump, and we will not go further on this issue. Further, when the water pump **30** is started, the main tube **21** of the shunt device **20** produces a water flow rate to draw out water in the shunt tube **22,** enabling impurities to be carried out of the filter **10** through the second water outlet pipe **15** and the shunt tube **22** and then discharged out of the outlet **213** of the main tube **21.** Therefore, the fluid shunt system of the present invention does not cause clogging or damage to the water pump **30.** Further, the fluid shunt system of the present invention can be used in medical, industrial or daily life fluid systems that require discharge of a fluid that contains impurities. When compared to prior art techniques, the invention greatly reduces filter element replacement frequency.

In this embodiment, the filter **10,** the shunt device **20** and the water pup **30** are connected to one another by flexible water tubes **40.** In actual practice, the shunt tube **22** can be directly connected to the filter **10.** Therefore, the connection arrangement among the filter **10,** the shunt device **20** and the water pup **30** are not limited to what is illustrated in FIG. 7.

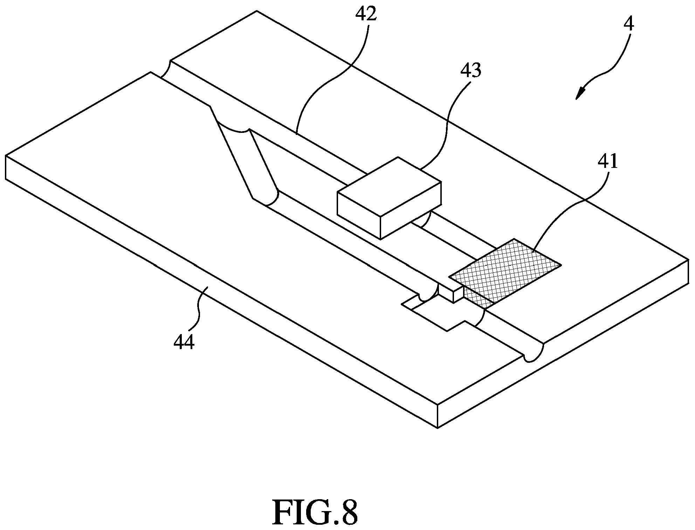

Referring to FIG. 8, an alternate form of the fluid shunt system in accordance with the present invention is shown. As illustrated, the fluid shunt system **4** of this alternate form comprises a filter **41,** a shunt device **42** and a water pump **43.** The structural design, functioning and purpose of these component parts are same as like component parts of the aforesaid first embodiment, and therefore, no further detailed description in this regard will be necessary. The main feature of this alternate form is that the fluid shunt system **4** further comprises a plate member **44.** The filter **41** and the shunt device **42** are directly formed on the plate member **44.** The plate member **44** can be a slate, steel plate or cement plate. The water pump **43** is mounted at the plate member **44.** Thus, the filter **41** and the shunt device **42** can be made in another way, and the aforesaid first embodiment is not a limitation.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A fluid shunt system (1, **4),** comprising:
a filter **(10, 41)** comprising an accommodation chamber **(17),** an inlet **(132),** a first outlet **(142),** a second outlet **(152)** and a filter element **(16),** said inlet **(132),** said first outlet **(142)** and said second outlet **(152)** being respectively disposed in communication with said accommodation chamber **(17),** said filter element **(16)** being mounted inside said accommodation chamber **(17)** and aimed at said first outlet **(142);**
a shunt device **(20, 42)** connected to said filter **(10, 41),** said shunt device **(20, 42)** comprising a first flow path **(211)** and a second flow path **(221),** said first flow path **(211)** defining an inlet **(212)** and an outlet **(213),** the diameter **(D1)** of said first flow path **(211)** being larger than the diameter **(D2)** of said second flow path **(221),** said second flow path **(221)** having two opposing ends thereof respectively connected to said first flow path **(211)** and the second outlet **(152)** of said filter **(10, 41),** one of the two opposing ends of said second flow path **(221)** being disposed between the inlet **(212)** and outlet **(213)** of said first flow path **(211);** and
a water pump **(30, 43)** connected between the first outlet **(142)** of said filter **(10, 41)** and the inlet **(212)** of said first flow path **(211)** of said shunt device **(20, 42).**

2. The fluid shunt system **(1, 4)** as claimed in claim 1, wherein said filter **(10, 41)** comprises a first housing **(11),** a second housing **(12),** a water intake pipe **(13),** a first water outlet pipe **(14)** and a second water outlet pipe **(15),** said first housing **(11)** and said second housing **(12)** being joined together, said first housing **(11)** and said second housing **(12)** each comprising opposing inner wall and outer, the inner walls of said first housing **(11)** and said second housing **(12)** defining said accommodation chamber **(17)** therebetween, said water intake pipe **(13)** being formed on the outer wall of said first housing **(11)** and defining therein a passage in communication with said accommodation chamber **(17),** said inlet **(132)** being located at one end of said water intake pipe **(13),** said first water outlet pipe **(14)** and said second water outlet pipe **(15)** being formed on the outer wall of said second housing **(12),** said first water outlet pipe **(14)** and said second water outlet pipe **(15)** each defining therein a respective passage respectively disposed in communication with said accommodation chamber **(17),** said first outlet **(142)** being located at one end of said first water outlet pipe **(14),** said second outlet **(152)** being located at one end of said second water outlet pipe **(15).**

3. The fluid shunt system **(1, 4)** as claimed in claim 2, wherein said first housing **(11)** retaining comprises two retaining hooks **(111, 112)** respectively disposed at two opposite lateral sides thereof; said second housing **(12)** comprises two retaining **rings (121, 122)** respectively disposed at two opposite lateral sides thereof, wherein said two retaining hooks **(111, 112)** being respectively inserted through said two retaining rings **(121, 122)** and hooked on said two retaining rings **(121, 122).**

4. The fluid shunt system **(1, 4)** as claimed in claim 3, wherein said first housing **(11)** further comprises an elastic ring **(113)** mounted in the inner wall thereof and stopped against the inner wall of said second housing **(12).**

5. The fluid shunt system **(1, 4)** as claimed in claim 2, wherein said first housing **(11)** further comprises at least one rib **(114, 115)** located at the inner wall thereof; said filter element **(16)** comprises two opposite sides, one side of said filter element **(16)** being abutted against said at least one rib **(114, 115)** of said first housing **(11),** the other side of said filter element **(16)** being abutted against the inner wall of said second housing **(12).**

6. The fluid shunt system **(1, 4)** as claimed in claim 1, wherein said shunt device (20, **42)** comprises a main tube **(21)** and a shunt tube **(22),** said shut tube being connected to said main tube **(21)** and extended from a tube wall of said main tube **(21);** said first flow path **(211)** being defined in said main tube **(21),** the inlet **(212)** and outlet **(213)** of said first flow path **(211)** being respectively located at two opposite ends of said main tube **(21),** said second flow path **(221)** being defined in said shunt tube **(22)** and having two opposite ends thereof respectively located at two opposite ends of said shunt tube **(22).**

7. The fluid shunt system **(1, 4)** as claimed in claim 1, further comprises a plate member **(44),** wherein said filter **(10, 41)** and said shunt device **(20, 42)** are formed on said plate member **(44);** said water pump **(30, 43)** is mounted at said plate member **(44).**

## Patentansprüche

1. Fluid-Abzweigungs-System (1,4), welches umfasst:
einen Filter (10, 41) mit einem Aufnahmeraum (17), einem Einlaß (132), einem ersten Auslaß (142), einem zweiten Auslaß (152) und einem Filter-Element (16), worin der Einlaß (132), der erste Auslaß (142) und der zweite Auslaß (152) jeweils in Verbindung mit dem Aufnahmeraum (17) angeordnet sind, worin das Filter-Element (16) in dem Aufnahmeraum (17) angeordnet und auf den ersten Auslaß (142) ausgerichtet ist;
eine Abzweigungs-Einrichtung (20, 42), die mit dem Filter (10, 41) verbunden ist, worin die Abzweigungs-Einrichtung (20, 42) einen Strömungsweg (211) und einen zweiten Strömungsweg (221) aufweist, worin der erste Strömungsweg (211) einen Einlaß (212) und einen Auslaß (213) definiert, worin der Durchmesser (D1) des ersten Strömungswegs (211) größer ist als der Durchmesser (D2) des zweiten Strömungswegs (221), worin zwei abgewandte Enden des zweiten Strömungswegs (221) jeweils mit dem ersten Strömungsweg (211) und dem zweiten Auslaß (152) des Filters (10, 41) verbunden sind, worin eines der abgewandten Enden des zweiten Strömungswegs (221) zwischen dem Einlaß (212) und Auslaß (213) des ersten Strömungswegs (211) verbunden sind; und
eine Wasserpumpe (30, 43), die zwischen dem ersten Auslaß (142) des Filters (10,41) und dem Einlaß (212) des ersten Strömungsweg (211) der Abzweigungs-Einrichtung (20, 42) verbunden ist.

2. Fluid-Abzweigungs-System (1, 4) nach Anspruch 1, worin der Filter (10, 41) ein erstes Gehäuse (11), ein zweites Gehäuse (12), eine Wasser-Zuführleitung (13), eine erste Wasser-Ablassleitung (14) und eine zweite Wasser-Ablassleitung (15) umfasst, worin das erste Gehäuse (11) und das zweite Gehäuse (12) miteinander verbunden sind, worin das erste Gehäuse (11) und das zweite Gehäuse (12) jeweils gegenüberliegende Innenwände und Aussenwände aufweisen, worin die Innenwände des ersten Gehäuses (11) und des zweiten Gehäuses (12) den Aufnahmeraum (17) dazwischen definieren, worin die Wasser-Zuführleitung (13) an der Aussenwand des ersten Gehäuses (11) ausgebildet ist und darin eine Leitung definiert, die mit dem Aufnahmeraum (17) in Verbindung steht, worin der Einlaß (132) an einem Ende der Wasser-Zuführleitung (13) angeordnet ist, worin die erste Wasser-Ablassleitung (14) und die zweite Wasser-Ablassleitung (15) an der Aussenwand des zweiten Gehäuses (12) ausgebildet ist, worin die erste Wasser-Ablassleitung (14) und die zweite Wasser-Ablassleitung (15) jeweils eine Leitung darin definieren, die in Verbindung mit dem Aufnahmeraum (17) ausgebildet ist, worin der erste Auslaß (142) an einem Ende der ersten Wasser-Ablassleitung (14) angeordnet ist, worin der zweite Auslaß (152) an einem Ende der zweiten Wasser-Ablassleitung (15) angeordnet ist.

3. Fluid-Abzweigungs-System (1, 4) nach Anspruch 2, worin das erste Gehäuse (11) zwei Haltegriffe (111, 112) aufweist, die jeweils an zwei abgewandten Seiten davon angeordnet sind; worin das zweite Gehäuse (12) zwei Halte-Ringe (121, 122) umfasst, die jeweils an zwei lateralen Seiten davon angeordnet sind, worin die zwei Halte-Ringe (111, 112) jeweils durch die zwei Halte-Ringe (121, 122) inseriert und an den zwei Halte-Ringen (121, 122) eingehakt sind.

4. Fluid-Abzweigungs-System (1, 4) nach Anspruch 3, worin das erste Gehäuse (11) weiter einen elastischen Ring (113) umfasst, der in der Innenwand davon befestigt ist und gegen die Innenwand des zweiten Gehäuses (12) abstoppt.

5. Fluid-Abzweigungs-System (1, 4) nach Anspruch 2, worin das erste Gehäuse (11) weiter mindestens eine Rippe (114, 115) umfasst, die an der Innenwand davon angeordnet ist, worin das Filter-Element (16) zwei abgewandte Seiten umfasst, worin eine Seite des Filter-Elements (16) gegen mindestens eine Rippe (114, 115) des ersten Gehäuses (11) aufliegt, worin die andere Seite des Filter-Elements (16) gegen die Innenwand des zweites Gehäuse (12) aufliegt.

6. Fluid-Abzweigungs-System (1, 4) nach Anspruch 1, worin die Abzweigungs-Einrichtung (20, 42) ein Haupt-Rohr (21) und ein Verzweigungs-Rohr (22) umfasst, worin das Verzweigungs-Rohr mit dem Haupt-Rohr (21) verbunden ist und sich von einer Rohrwandung des Haupt-Rohrs (21) erstreckt; worin der erste Strömungsweg (211) in dem Haupt-Rohr (21) definiert ist, worin der Einlaß (212) und der Auslaß (213) des ersten Strömungswegs (211) jeweils an zwei abgewandten Enden des Haupt-Rohrs (21) angeordnet sind, worin der zweite Strömungsweg (221) in dem Verzweigungs-Rohr (22) definiert ist und worin zwei abgewandte Enden davon jeweils an zwei abgewandten Enden des VerzeigungsRohrs (22) angeordnet sind.

7. Fluid-Abzweigungs-System (1, 4) nach Anspruch 1, welches weiter ein PlattenElement (44) umfasst, worin der Filter (10, 41) und die Abzweigungs-Einrichtung (20, 42) auf dem Plattenelement (44) ausgebildet sind; worin die Wasserpumpe (30, 43) an dem Plattenelement (44) befestigt ist.

## Revendications

1. Système de dérivation de fluide (1, 4) comprenant :
- un filtre (10, 41) comprenant une chambre de réception (17), une entrée (132), une première sortie (142), une deuxième sortie (152) et un élément filtrant (16), ladite entrée (132), ladite première sortie (142) et ladite deuxième sortie (152) étant respectivement disposées en communication avec ladite chambre de réception (17), ledit élément filtrant (16) étant monté à l'intérieur de ladite chambre de réception (17) et dirigé vers ladite première sortie (142) ;
- un dispositif de dérivation (20, 42) relié audit filtre (10, 41), ledit dispositif de dérivation (20, 42) comprenant un premier trajet d'écoulement (211) et un deuxième trajet d'écoulement (221), ledit premier trajet d'écoulement (211) définissant une entrée (212) et une sortie (213), le diamètre (D1) dudit premier trajet d'écoulement (211) étant supérieur au diamètre (D2) dudit deuxième trajet d'écoulement (221), ledit deuxième trajet d'écoulement (221) présentant des extrémités opposées respectivement reliées audit premier trajet d'écoulement (211) et à la deuxième sortie (152) dudit filtre (10, 41), l'une des deux extrémités opposées dudit deuxième trajet d'écoulement (221) étant disposée entre l'entrée (212) et la sortie (213) dudit premier trajet d'écoulement (211) ; et
- une pompe à eau (30, 43) raccordée entre la première sortie (142) dudit filtre (10, 41) et l'entrée (212) dudit premier trajet d'écoulement (211) dudit dispositif de dérivation (20, 42).

2. Système de dérivation de fluide (1, 4) selon la revendication 1, dans lequel ledit filtre (10, 41) comprend un premier boîtier (11), un deuxième boîtier (12), un tuyau d'admission d'eau (13), un premier tuyau de sortie d'eau (14) et un deuxième tuyau de sortie d'eau (15), ledit premier boîtier (11) et ledit deuxième boîtier (12) étant reliés ensemble, ledit premier boîtier (11) et ledit deuxième boîtier (12) comprenant chacun des parois intérieure et extérieure opposées, les parois intérieures dudit premier boîtier (11) et dudit deuxième boîtier (12) définissant ladite chambre de réception (17) entre elles, ladite pompe d'admission d'eau (13) étant formée sur la paroi extérieure dudit premier boîtier (11) et définissant un passage en communication avec ladite chambre de réception (17), ladite entrée (132) étant située à une extrémité dudit tuyau d'admission d'eau (13), ledit premier tuyau de sortie d'eau (14) et ledit deuxième tuyau de sortie d'eau (15) étant formés sur la paroi extérieure dudit deuxième boîtier (12), ledit premier tuyau de sortie d'eau (14) et ledit deuxième tuyau de sortie d'eau (15) définissant chacun un passage respectif respectivement disposé en communication avec ladite chambre de réception (17), ladite première sortie (142) étant située à une extrémité dudit premier tuyau de sortie d'eau (14), ladite deuxième sortie (152) étant située à une extrémité dudit deuxième tuyau de sortie d'eau (15).

3. Système de dérivation de fluide (1, 4) selon la revendication 2, dans lequel ledit premier boîtier (11) comprend deux crochets de retenue (111, 112) respectivement disposés sur deux côtés latéraux opposés de celui-ci ; ledit deuxième boîtier (12) comprend deux anneaux de retenue (121, 122) respectivement disposés sur deux côtés latéraux opposés de celui-ci, lesdits deux crochets de retenue (111, 112) étant insérés respectivement à travers lesdits deux anneaux de retenue (121, 122) et accrochés auxdits deux anneaux de retenue (121, 122).

4. Système de dérivation de fluide (1, 4) selon la revendication 3, dans lequel ledit premier boîtier (11) comprend en outre un anneau élastique (113) monté dans la paroi intérieure de celui-ci et stoppé contre la paroi intérieure dudit deuxième boîtier (12).

5. Système de dérivation de fluide (1, 4) selon la revendication 2, dans lequel ledit premier boîtier (11) comprend en outre au moins une nervure (114, 115) située sur la paroi intérieure de celui-ci ; ledit élément filtrant (16) comprend deux côtés opposés, un côté dudit élément filtrant (16) butant contre ladite au moins une nervure (114, 115) dudit premier boîtier (11), l'autre côté dudit élément filtrant (16) butant contre la paroi intérieure dudit deuxième boîtier (12).

6. Système de dérivation de fluide (1, 4) selon la revendication 1, dans lequel ledit dispositif de dérivation (20, 42) comprend un tube principal (21) et un tube de dérivation (22), ledit tube de dérivation étant relié audit tube principal (21) et s'étendant à partir d'une paroi de tube dudit tube principal (21) ; ledit premier trajet d'écoulement (211) étant défini dans ledit tube principal (21), l'entrée (212) et la sortie (213) dudit premier trajet d'écoulement (211) étant respectivement située à deux extrémités opposées dudit tube principal (21), ledit deuxième trajet d'écoulement (221) étant défini dans ledit tube de dérivation (22) et présentant deux extrémités opposées respectivement situées à deux extrémités opposées dudit tube de dérivation (22).

7. Système de dérivation de fluide (1, 4) selon la revendication 1, comprenant en outre un élément de plaque (44), ledit filtre (10, 41) et ledit dispositif de dérivation (20, 42) étant formés sur ledit élément de plaque (44) ; ladite pompe à eau (30, 43) étant montée sur ledit élément de plaque (44).
